# DEMANDE DE BREVET EUROPEEN

(11) **EP 0 566 466 A1**
(43) Date de publication de la demande: **20.10.1993**
(21) Numéro de dépôt: 93400946.5
(22) Date de dépôt: 09.04.1993
(51) Int. Cl.: B62D 61/12

(54) **Train de roulage rétractable pour véhicule à sustentation sans contact**

(30) Priorité: 15.04.1992 FR 9204624
(71) Demandeur: MESSIER BUGATTI, F-78140 Velizy Villacoublay (FR)
(72) Inventeur: Derrien, Michel, F-78000 Versailles (FR); Martin, Pascal, F-91650 Breuillet (FR); Robuchon, Alain, F-91310 Montlhery (FR)
(74) Mandataire: Jaunez, Xavier

(57) **Abrégé**

L'invention concerne un train de roulage rétractable comportant un balancier (11) articulé au véhicule et supportant au moins une roue (14) ; un amortisseur (20.1) et un vérin hydraulique de commande (30.1) reliés entre eux au niveau de deux extrémités associées, l'amortisseur étant articulé à son autre extrémité à un axe de commande de basculement (15) associé au balancier (11), tandis que le vérin de commande est articulé au véhicule par son autre extrémité sensiblement à la verticale de l'axe de basculement (12) ; une lame élastique cintrée (50.1) agissant en permanence sur l'amortisseur (20.1) dans le sens de l'extension de celui-ci, et une bielle de stabilisation (40.1) associée à la liaison entre l'amortisseur et le vérin de commande. L'amortisseur et le vérin de commande sont en outre agencés pour être alignés sur une même direction (X) lorsque le train est sorti.

## Description

La présente invention concerne un train de roulage rétractable pour véhicules à sustentation sans contact, notamment les véhicules à sustentation magnétique ou par coussin d'air.

De tels véhicules doivent être équipés de trains de roulage rétractables permettant d'assurer la sustentation, et souvent aussi le freinage, à vitesse réduite ou à tout le moins au moment des arrêts, et aussi en secours, en cas de défaillance du système de sustentation sans contact.

Les trains de roulage doivent être alors conçus pour être déplaçables entre une position rentrée, dans laquelle la ou les roues de chaque train et organes de liaison à la structure du véhicule sont relevés pour que chaque train soit reçu dans un logement associé dudit véhicule, et une position sortie, dans laquelle ladite ou lesdites roues et lesdits organes de liaison associés sont abaissés pour que chaque train soit capable de supporter la charge correspondante du véhicule qui roule alors directement sur sa piste, en prenant ainsi le relais du système de sustentation sans contact.

L'état de la technique est illustré par le document FR-A-2 443 369 de la demanderesse. La structure du train concerné comporte plusieurs contre-fiches, et apparait de ce fait relativement complexe.

On a également proposé des trains de roulage rétractables pour véhicules amphibies (comme illustré par exemple dans les documents US-A-3 779 574, GB-A-2 134 052, DE-U-1 998 853), ou encore pour des véhicules routiers, tractés ou non (comme illustré par exemple dans les documents US-A-4 065 153, US-A-4 711 464, FR-A-2 528 364, GB-A-675 307 et DE-U-1 925 695).

Le document DE-U-1 998 853 décrit en particulier un train de roulage rétractable pour véhicule amphibie, comportant un balancier articulé supportant une roue, un levier articulé autour du même axe que le balancier, un amortisseur monté entre les extrémités du balancier et du levier, cet amortisseur étant entouré par un ressort hélicoïdal, et un système de manoeuvre à vis-écrou, manoeuvrable à la main, agissant directement sur le levier pour faire varier la garde au sol (afin de s'adapter à des sols plus ou moins réguliers).

Un tel agencement pourrait difficilement être utilisé pour des véhicules rapides à sustentation magnétique ou à coussin d'air, car les organes constitutifs sont très sensibles aux vibrations (en particulier le levier qui est constamment sollicité en flexion), et la masse des composants est nécessairement élevée pour résister aux efforts de flexion engendrés par la disposition relative de ces composants, une telle masse élevée devenant un inconvénient majeur dans le cas d'un véhicule à sustentation magnétique ou à coussin d'air.

L'invention a pour objet de réaliser un train de roulage qui soit à la fois de structure simple et compacte, tout en étant performant et fiable pour le support de la charge associée.

L'invention a également pour objet de réaliser un train de roulage dont l'intégration dans le véhicule soit favorable, notamment en limitant les zones à rigidité renforcée du logement de réception associé.

Il s'agit plus particulièrement d'un train de roulage rétractable pour véhicule à sustentation sans contact, caractérisé par le fait qu'il comporte :
- un balancier ayant une première extrémité fixée de façon articulée au véhicule autourd'un axe de basculement, et supportant au moins une roue ;
- un amortisseur et un vérin hydraulique de commande reliés entre eux au niveau de deux extrémités associées, dont l'un est articulé par son autre extrémité à un axe de commande de basculement agencé sur une seconde extrémité du balancier, tandis que l'autre est articulé au véhicule par son autre extrémité, sensiblement à la verticale de l'axe de basculement dudit balancier ;
- un élément ressort en forme de lame élastique cintrée agencé pour exercer en permanence une action sur ledit amortisseur dans le sens de l'extension de celui -ci ;
- un moyen rigide de stabilisation associé à la liaison entre ledit amortisseur et ledit vérin de commande;
- et par le fait que l'amortisseur, le vérin hydraulique de commande et le moyen rigide de stabilisation précités sont agencés dans un plan vertical commun de telle façon que l'amortisseur d'une part, et le vérin de commande ou le moyen rigide de stabilisation d'autre part, soient alignés sur une même direction lorsque le train de roulage est sorti.

Conformément à un premier type de conception envisageable, l'amortisseur et le vérin hydraulique de commande sont reliés entre eux par une liaison articulée, et le moyen rigide de stabilisation est une bielle ayant une première extrémité articulée au véhicule autour d'un axe de pivotement, et une seconde extrémité articulée au niveau de la liaison articulée entre ledit amortisseur et ledit vérin de commande.

Il est alors possible de prévoir que l'axe de pivotement de la bielle de stabilisation est confondu avec l'axe de basculement du balancier, et que l'élément ressort est intercalé entre les secondes extrémités de ladite bielle et dudit balancier.

En variante, l'axe de pivotement de la bielle de stabilisation peut être disposé entre l'axe de basculement du balancier et l'axe d'articulation au véhicule de celui de l'amortisseur ou du vérin hydraulique de commande qui est relié audit véhicule, et dans ce cas l'élément ressort est intercalé entre ledit amortisseur et ledit vérin de commande.

Selon encore une autre variante, le vérin hydraulique de commande est articulé au véhicule autour d'un axe adjacent à l'axe de basculement du balancier, et son autre extrémité est articulée sur la bielle de stabilisation au voisinage de l'articulation de l'amortisseur sur ladite bielle, et l'élément ressort est intercalé entre ledit amortisseur et ladite bielle.

Conformément à un second type de conception envisageable, l'amortisseur et le vérin hydraulique de commande sont agencés coaxialement et rigidement liés l'un à l'autre par leur corps, cette liaison rigide constituant alors le moyen de stabilisation. De préférence alors, l'amortisseur est articulé par sa tige au véhicule et le vérin de commande est articulé par sa tige au balancier, et l'élément ressort est intercalé entre l'articulation dudit amortisseur et le corps dudit vérin de commande.

Selon un mode d'exécution particulier, l'élément ressort est réalisé sous la forme d'une lame élastique monobloc, ou en variante sous la forme de deux demi-lames élastiques se raccordant à une pièce d'angle commune.

Conformément à une autre caractéristique particulière, l'amortisseur est réalisé sous la forme d'un amortisseur hydraulique linéaire. Il est cependant possible d'envisager d'autres types d'amortisseurs, et en particulier des amortisseurs à système rotatif, par exemple des amortisseurs à gomme ou à friction.

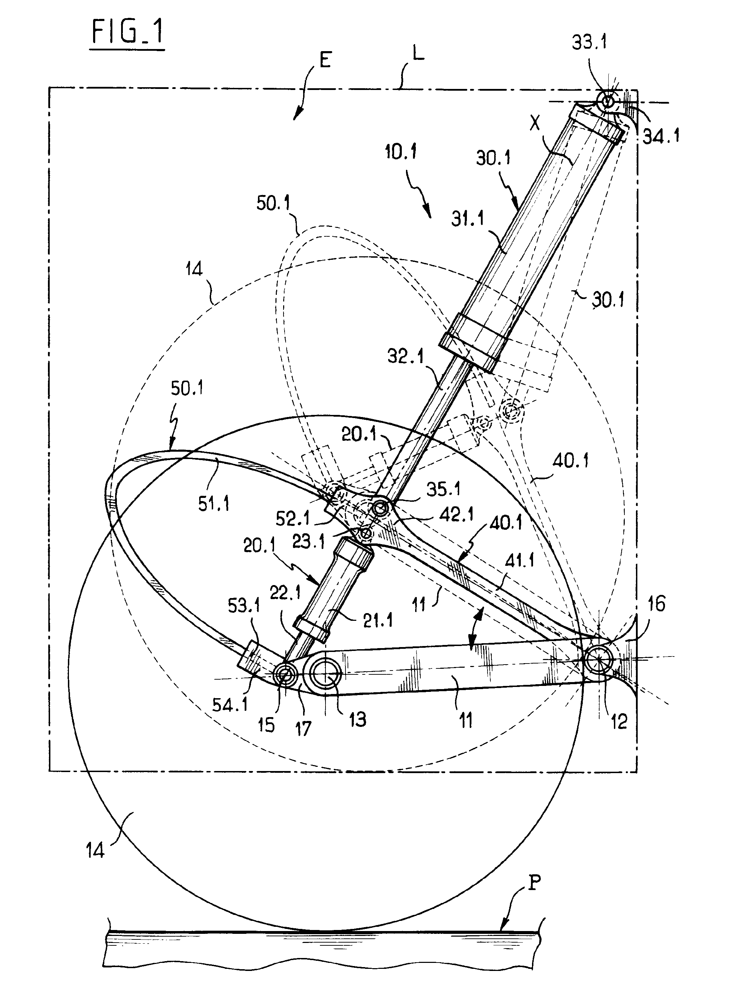

D'autres caractéristiques et avantages de l'invention apparaîtront plus clairement à la lumière de la description qui va suivre et des dessins annexés, concernant un mode de réalisation particulier, en référence aux figures 1 à 6, qui illustrent différents exemples de trains de roulage conformes à l'invention, avec, pour chaque figure, une représentation en trait continu pour la position "train sorti", et une représentation en pointillés pour la position "train rentré", le logement associé du véhicule étant seulement schématisé par un contour rectangulaire en traits mixtes.

La figure 1 illustre un premier exemple de train de roulage conforme à l'invention, ledit train étant référencé 10.1. Le contour rectangulaire schématise une partie de structure L d'un véhicule à sustentation sans contact, par exemple à sustentation magnétique ou par coussin d'air, délimitant un espace ou logement E qui est conçu pour que le train soit reçu lorsqu'il est dans sa position rentré.

Le train de roulage 10.1 comporte tout d'abord un balancier 11 ayant une première extrémité fixée de façon articulée au véhicule autour d'un axe de basculement 12, au niveau d'un gousset associé 16 solidaire de la structure dudit véhicule. Le balancier 11 supporte, à son autre extrémité, un axe 13 associé à une ou plusieurs roues 14. Lorsque le train de roulage 10.1 est rentré, conformément à la position illustrée en pointillés, la ou les roues 14, et les organes de liaisons associés, sont relevés pour être reçus dans le logement E. Lorsque le train de roulage est sorti, par suite d'un basculement du balancier 11 autour de son axe 12, la ou les roues 14 sont abaissées jusqu'à contacter une piste de roulement associée P, ce qui permet alors d'assurer le support de la charge correspondante du véhicule qui roule directement sur cette piste, en prenant ainsi le relais du système de sustentation sans contact.

Le train de roulage 10.1 comporte en outre un amortisseur 20.1 et un vérin hydraulique de commande 30.1 reliés entre eux au niveau de deux extrémités associées, dont l'un (ici l'amortisseur 20.1) est articulé par son autre extrémité à un axe de commande de basculement 15, agencé ici sur un appendice associé 17 du balancier 11, tandis que l'autre (ici le vérin de commande 30.1) est articulé au véhicule par son autre extrémité, en l'espèce autour d'un axe 33.1 associé à un gousset 34.1 solidaire de la structure du véhicule, sensiblement à la verticale de l'axe de basculement 12 dudit balancier. De plus, un élément ressort 50.1 en forme de lame élastique cintrée (ici une lame monobloc) est agencé pour exercer en permanence une action sur l'amortisseur 20.1 dans le sens de l'extension de celui-ci, et un moyen rigide de stabilisation 40.1 est associé à la liaison entre l'amortisseur 20.1 et le vérin de commande 30.1.

Le train de roulage 10.1 illustré en figure 1 comporte ainsi un vérin hydraulique de commande 30.1 dont le corps 31.1 est articulé au véhicule (par l'axe 33.1 précité), et dont la tige 32.1 est articulée, par un axe 35.1, au niveau d'une liaison articulée entre ledit vérin de commande et l'amortisseur 20.1. L'amortisseur20.1 comporte quant lui un corps 21.1 articulé par son extrémité au niveau de la liaison articulée précitée, par l'intermédiaire d'un axe 23.1, et une tige 22.1 articulée par son extrémité sur l'axe de commande de basculement 15.

L'amortisseur 20.1 et le vérin de commande 30.1 sont ici reliés entre eux par une liaison articulée (comportant les axes 35.1 et 23.1 précités), de sorte qu'il est nécessaire de prévoir un organe supplémentaire constituant un moyen rigide de stabilisation 40.1 associé à cette liaison articulée, ledit moyen étant ici réalisé sous la forme d'une bielle 41.1 ayant une première extrémité articulée autour d'un axe de pivotement, et une seconde extrémité articulée au niveau de la liaison articulée entre l'amortisseur 20.1 et le vérin de commande 30.1. En l'espèce, l'axe de pivotement de la bielle de stabilisation 41.1 est confondu avec l'axe de basculement 12 du balancier 11, de sorte que le train de roulage 10.1 ne comporte que deux points d'attache (au niveau des goussets 16 et 34.1), qui sont en outre agencés sensiblement sur une même verticale, c'est-à-dire sur un bord latéral du logement de réception associé L, ce qui est particulièrement favorable à l'intégration du train de roulage dans le véhicule dans la mesure où l'on parvient à limiter considérablement les zones à rigidité renforcée pour le logement de réception précité. A son autre extrémité, la bielle de stabilisation 41.1 présente une extrémité élargie 42.1, au niveau de laquelle sont agencés les axes d'articulation précités 35.1 et 23.1. On distingue en outre sur la figure 1 l'élément ressort 50.1, réalisé sous la forme d'une lame élastique cintrée monobloc 51.1, intercalé entre les extrémités (opposées à l'articulation commune sur la structure du véhicule) de la bielle de stabilisation 41.1 et du balancier 11. La lame élastique cintrée 51.1 est ici encastrée par ses deux extrémités 52.1 et 53.1, respectivement dans l'extrémité 42.1 de la bielle de stabilisation 41.1, et dans un appendice 54.1 qui peut être pivotant (autour de l'axe de commande de basculement 15) ou encore solidaire du balancier 11. La lame élastique cintrée 51.1 assure ainsi en permanence une action tendant à allonger l'amortisseur 20.1.

Conformément à une caractéristique importante de l'invention, l'amortisseur 20.1, le vérin hydraulique de commande 30.1 et la bielle de stabilisation 41.1 sont agencés dans un plan vertical commun de telle façon que l'amortisseur 20.1 et le vérin de commande 30.1 soient alignés lorsque le train de roulage 10.1 est sorti, cette direction commune (notée X) correspondant à l'axe de chacun de ces deux organes. Grâce à une telle disposition, on est alors assuré que la bielle de stabilisation 41.1 est soumise à un minimum d'efforts parasites de flexion lors du roulement du véhicule sur la piste associée P.

L'amortisseur 20.1 est ici réalisé sous la forme d'un amortisseur hydraulique linéaire, conformément à une technique bien connue dans le domaine des trains d'atterrissage d'aérodynes. Une telle structure présente l'avantage de la simplicité et de la robustesse. Il est cependant possible d'envisager un amortisseur agencé différemment, en particulier un amortisseur réalisé sous la forme d'un système rotatif, de préférence à gomme ou à friction. Les amortisseurs "à gomme" sont des amortisseurs à compression hydrostatique d'élastomère pâteux, et on connaît déjà de tels amortisseurs qui sont largement utilisés dans le cadre des éléments de suspension pour véhicules lourds en étant associés au palier du bras oscillant de cette suspension. Les amortisseurs à friction utilisent quant à eux en général des disques de friction imbriqués reçus dans un carter commun, et l'on emploie également de tels amortisseurs pour réaliser des ensembles de suspension du type à bras oscillant pour véhicules lourds.

La lame élastique cintrée 51.1 est ici encastrée perpendiculairement aux organes de support associés, mais il va de soi que ceci ne constitue qu'un exemple possible.

Dans tous les cas, on utilise des organes séparés pour assurer d'une part la fonction ressort, ici par l'intermédiaire de la lame élastique cintrée 51.1, et d'autre part la fonction laminage, par l'intermédiaire de l'amortisseur ici linéaire 20.1.

Le vérin de commande 30.1 sera quant à lui analogue à ceux que l'on utilise déjà pour les trains d'atterrissage d'aérodynes, en étant équipé d'un double verrouillage pour les deux positions extrêmes de sa tige. On connaît de tels vérins de commande, qui comportent un premier système à griffes porté par le cylindre, coopérant avec la tige du vérin, et un second système à griffes également porté par le cylindre (au niveau du fond de celui-ci), ce dernier système coopérant avec un plongeur axial porté par la tige du vérin. Le verrouillage est ainsi assuré de façon automatique, et le déverrouillage est effectué hydraulique- ment, ce qui confère toute la sécurité voulue. Ces deux systèmes de verrouillage interne permettent de verrouiller le train dans ses deux positions extrêmes (train sorti et train rentré).

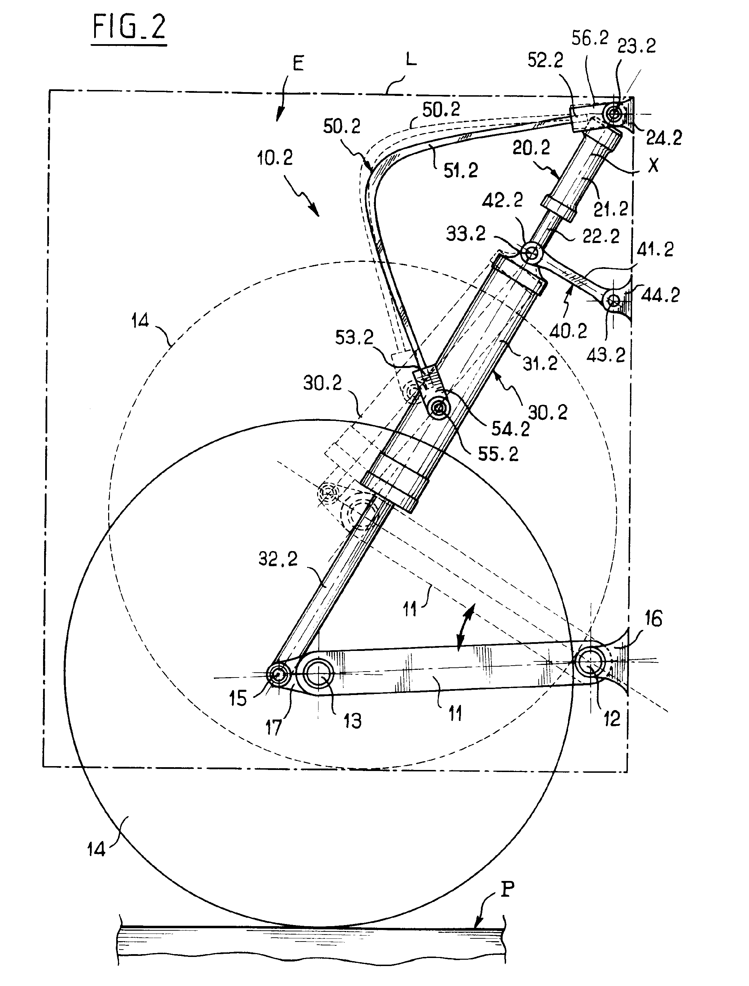

On va maintenant décrire, en se référant aux figures 2 à 6, d'autres exemples possibles de trains de roulage conformes à l'invention, en conservant, pour les moyens homologues, les mêmes références que pour la figure 1, mais avec un indice terminal allant alors respectivement de 2 à 6.

Le train de roulage 10.2 comporte comme précédemment un balancier 11 articulé par un extrémité au véhicule autour de l'axe de basculement 12, ledit balancier présentant à son autre extrémité un appendice 17 associé à un axe de commande de basculement 15. A la différence du train de roulage précédent, le train de roulage 10.2 comporte un amortisseur 20.2 qui est articulé au véhicule, et un vérin hydraulique de commande 30.2 qui est articulé à l'axe de commande de basculement 15. L'amortisseur 20.2 comporte un corps 21.2 articulé autour d'un axe 23.2 associé à un gousset 24.2 faisant partie de la structure du véhicule. L'extrémité libre de sa tige 22.2 est associée à une liaison articulée entre cet amortisseur et le vérin de commande 30.2. Le vérin de commande 30.2 comporte ainsi un corps 31.2 articulé au niveau de la liaison précitée, et une tige 32.2 articulée par son extrémité libre à l'axe de commande de basculement 15. Le moyen rigide de stabilisation associé à la liaison entre l'amortisseur 20.2 et le vérin de commande 30.2, référencé 40.2, est comme précédemment réalisé sous la forme d'une bielle 41.2, cette bielle étant articulée à une extrémité autour d'un axe 43.2 associé à un gousset 44.2 solidaire de la structure du véhicule, et par son autre extrémité 42.2 au niveau de la liaison articulée entre la tige 22.2 de l'amortisseur et le corps 32.2 du vérin de commande. L'axe de pivotement 43.2 de la bielle de stabilisation 41.2 est donc ici disposé entre l'axe de basculement 12 du balancier 11 et l'axe d'articulation au véhicule de l'amortisseur 20.2. On trouve ainsi un ensemble de trois points d'attache, représentés par les axes 23.2, 43.2 et 12 qui sont essentiellement alignés sur une même verticale. La présence d'un troisième point d'attache à la structure du véhicule est peut-être légèrement moins avantageuse que l'agencement précédent à deux points d'attache, mais permet d'avoir une bielle de stabilisation beaucoup plus courte.

L'élément ressort 50.2 est là encore réalisé sous la forme d'une lame élastique cintrée 51.2 qui est monobloc, encastrée par ses extrémités 52.2 et 53.2, mais ici au niveau de deux appendices articulés, à savoir un appendice 56.2 articulé autour de l'axe 23.2, qui correspond à l'articulation de l'amortisseur 20.2, et un appendice 54.2 articulé autour d'un axe 55.2 associé au corps 31.2 du vérin de commande. Il va de soi cependant que l'on pourra organiser différemment les points d'attache de la lame élastique cintrée, par exemple en prévoyant une attache au niveau de la liaison articulée entre l'amortisseur et le vérin de commande.

Comme précédemment, l'amortisseur 20.2, le vérin hydraulique de commande 30.2, et la bielle de stabilisation 41.2 sont agencés dans un plan vertical commun de telle façon que l'amortisseur 20.2 et le vérin de commande 30.2 soient alignés selon une direction commune X lorsque le train de roulage 10.2 est sorti. On trouve ainsi (comme pour l'exemple précédemment décrit), dans cette position du train de roulage, un agencement en forme de triangle rectangle, dont l'hypoténuse est constituée par l'alignement de l'amortisseur et du vérin de commande, et dont un côté de l'angle droit est constitué par le balancier, l'autre côté du triangle étant représenté par la ligne des points d'attache sur la structure du véhicule, cette dernière ligne étant essentiellement verticale.

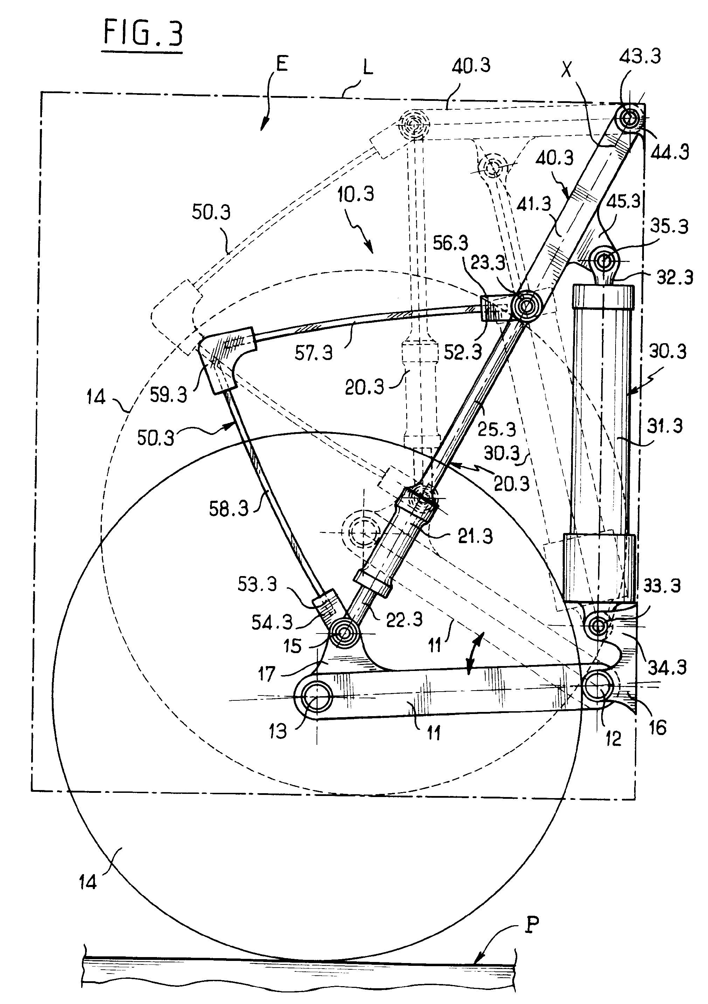

La figure 3 illustre un autre exemple de train de roulage 10.3, comportant comme précédemment un balancier 11 articulé autour d'un axe de basculement 12, et portant un axe de commande de basculement agencé sur un appendice 17, lequel est ici disposé du côté supérieur dudit balancier. Le vérin hydraulique de commande 30.3 est articulé au véhicule, autour d'un axe 33.3 qui est de préférence adjacent à l'axe de basculement 12 du balancier 11. Le vérin hydraulique de commande 30.3 est ainsi articulé par son corps 31.3 sur un gousset 34.3, qui est ici associé au gousset 16 d'articulation du balancier 11 pour constituer une pièce d'attache unique. La tige 32.3 du vérin de commande 30.3 est articulée autour d'un axe 35.3 sur un appendice 45.3 d'une bielle de stabilisation 41.3, ladite bielle étant elle-même articulée autour d'un axe 43.3 sur un gousset 44.3 associé à la structure du véhicule. En outre, l'amortisseur 20.3 comporte un corps 21.3 présentant ici un prolongement coaxial 25.3 qui est articulé par son extrémité autour d'un axe 23.3 associé à l'extrémité libre de la bielle de stabilisation 41.3. La tige 22.3 de cet amortisseur 20.3 est quant à elle articulée autour de l'axe de commande de basculement 15 associé au balancier 11. De façon quelque peu analogue à l'exemple de la figure 1, l'élément élastique cintré 50.3 est intercalé entre l'amortisseur 20.3 et la bielle de stabilisation 41.3. Cet élément élastique cintré 50.3 est cependant ici réalisé sous la forme de deux demi-lames élastiques 57.3 et 58.3 qui se raccordent à une pièce d'angle commune 59.3. Les extrémités libres 52.3 et 53.3 de ces demi-lames élastiques 57.3 et 58.3 sont quant à elles, comme précédemment, encastrées dans des appendices associés 56.3 et 54.3. Ces appendices sont de préférence articulés, comme cela est représenté ici au niveau des axes associés aux articulations de l'amortisseur, c'est-à-dire les axes 23.3 et 15. L'utilisation d'une pièce d'angle commune peut s'avérer plus favorable dans la mesure ou elle permet d'avoir un angle de fermeture relativement faible entre les deux demi-lames élastiques.

Il convient en outre d'observer que l'amortisseur 20.3, le vérin hydraulique de commande 30.3 et la bielle de stabilisation 41.3 sont agencés dans un même plan vertical de telle façon que l'amortisseur 20.3 et la bielle de stabilisation 41.3 soient alignés sur une même direction X lorsque le train de roulage 10.3 est sorti. Grâce à cette disposition d'alignement que l'on retrouve encore, on est assuré que les efforts ne transitent pas parla direction du vérin, ce qui présente un avantage par rapport aux deux exemples précédents dans la mesure où l'on parvient à supprimer les efforts exercés sur les griffes des systèmes de verrouillage intégrés au vérin hydraulique de commande (lorsque le train de roulage est sorti). Ainsi, dans le cadre de cet exemple de train de roulage, la bielle 41.3 assure à la fois une fonction de stabilisation et une fonction de transmission d'efforts, surtout lorsque le train est sorti. Il va également de soi que l'on pourra en variante prévoir un amortisseurar- ticulé sur la structure du véhicule, et une bielle de stabilisation interposée entre cet amortisseur et l'extrémité du balancier, la tige du vérin de commande étant alors articulée sur un appendice latéral de cette bielle de stabilisation.

On retrouve comme précédemment, lorsque le train est sorti, une disposition sensiblement en forme de triangle rectangle.

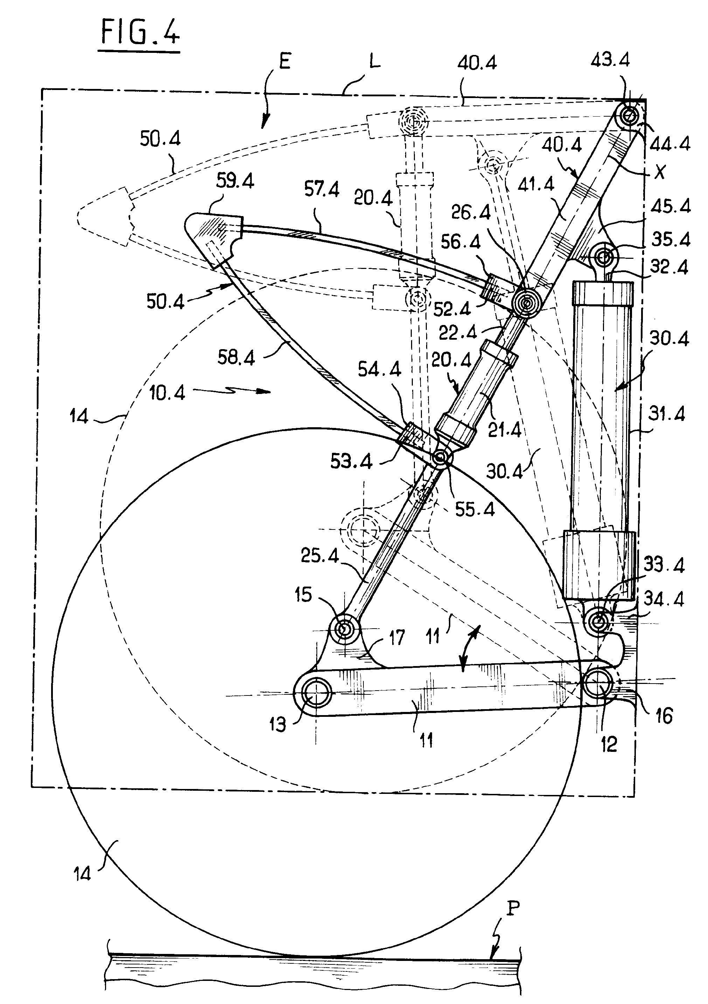

L'exemple illustré à la figure 4 est proche de celui qui vient d'être décrit en référence à la figure 3. La différence principale réside dans le déplacement de l'un des points d'accrochage de l'élément ressort qui est là encore réalisé sous la forme de deux demi-lames élastiques se raccordant à une pièce d'angle commune. En effet, l'amortisseur 20.4 présente une disposition inversée par rapport à la variante précédente, c'est-à-dire que le prolongement 25.4 de son corps 21.4 est articulé sur l'axe de commande de basculement 15, tandis que sa tige 22.4 est articulée sur l'axe 26.4 prévu au niveau de l'extrémité libre de la bielle de stabilisation 41.4. La demi-lame 58.4 est alors encastrée, par son extrémité 53.4, sur un appendice pivotant 54.4 qui est associé à un axe 55.4 adjacent au raccordement entre le corps 21.4 et son prolongement 25.4. L'autre demi-lame 57.4 est, comme précédemment, encastrée sur un appendice 52.4 venant s'articuler sur l'axe 26.4 précité. L'avantage d'un tel agencement réside dans un emplacement plus favorable de l'élément ressort 50.4, dans la mesure où le relevage de la demi-lame inférieure permet de gagner de la place dans la zone de l'axe de roue, ce qui facilite l'installation et la maintenance des freins à disques associés. On retrouve là encore l'alignement entre l'amortisseur 20.4 et la bielle de stabilisation 41.4 en position train bas.

Il convient de noter que les trains de roulage 10.2, 10.3, 10.4 qui viennent d'être illustrés en se référant aux figures 2 à 4 peuvent présenter la variante précédemment mentionnée pour l'exemple de la figure 1, en prévoyant un amortisseurà système rotatif (à gomme ou à friction).

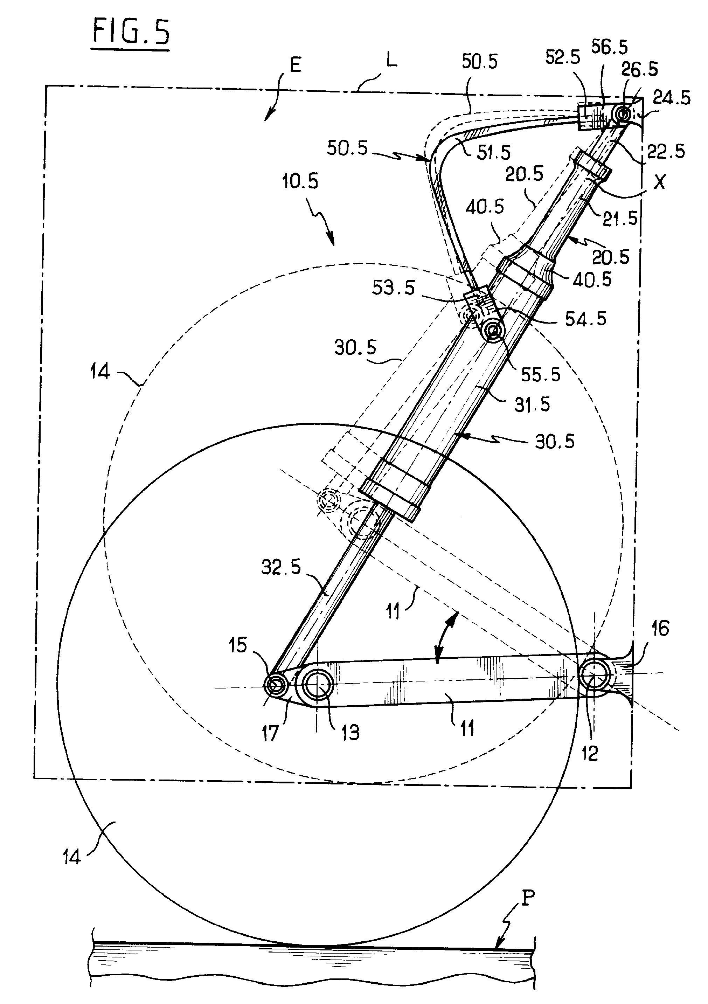

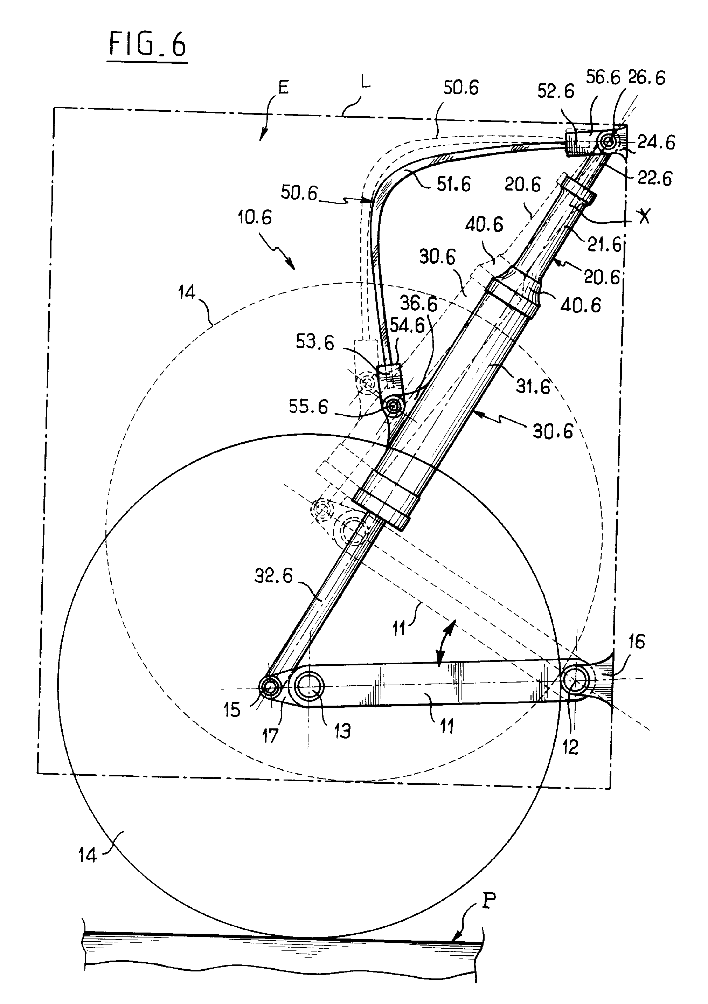

On va maintenant décrire, en se référant aux figures 5 et 6, deux autres exemples de trains de roulage conformes à l'invention, dans lesquels l'amortisseur et le vérin hydraulique de commande ne sont plus, comme précédemment, reliés entre eux par une liaison articulée, mais sont agencés coaxialement et rigidement liés l'un à l'autre par leur corps, cette liaison rigide constituant alors le moyen de stabilisation qui était auparavant réalisé sous la forme d'une bielle de stabilisation.

Le train de roulage 10.5 illustré en figure 5, comporte, comme précédemment, un balancier 11 articulé autour d'un axe de basculement 12 sur un gousset 16, et présentant, à son autre extrémité, un appendice 17 associé à un axe de commande de basculement 15. Le train de roulage 10.5 comporte un amortisseur 20.5 et un vérin hydraulique de commande 30.5, dont les corps 21.5 et 31.5 sont rigidement liés l'un à l'autre, comme cela est schématisé par une pièce intermédiaire de jonction 40.5. La tige 22.5 de l'amortisseur 20.5 est articulée autour d'un axe 26.5 associée à un gousset 24.5 solidaire de la structure du véhicule, et la tige 32.5 du vérin de commande 30.5 est articulée par son extrémité autour de l'axe de commande de basculement 15. La liaison rigide entre l'amortisseur 20.5 et le vérin de commande 30.5, qui peut être une liaison d'origine en prévoyant un corps commun, ou encore découler d'une juxtaposition des deux organes raboutés, permet d'assurer elle-même la fonction de stabilisation précédemment assurée par une bielle. La structure est par suite plus simple, et peut être réalisée de façon très compacte. En outre, deux points d'attache à la structure du véhicule suffisent pour l'accrochage du système articulé. Dans ce cas, l'amortisseur 20.5 et le vérin de commande 30.5 sont de facto dans un plan vertical commun en étant en permanence alignés sur une même direction X, alors que cet alignement était uniquement obtenu en position train sorti dans les exemples précédents. Lorsque le train est sorti, on retrouve encore un agencement ayant la forme générale d'un triangle rectangle. L'élément ressort 50.5 est organisé de la même façon que l'élément 50.2 équipant le train de roulage 10.2 précédemment décrit. On retrouve ainsi une lame élastique cintrée 51.5, encastrée par ses extrémités 52.5 et 53.5 dans des appendices pivotants 56.5 et 54.5, ces appendices étant respectivement agencés au niveau de l'axe 26.5 d'articulation de l'amortisseur sur la structure du véhicule, et d'un tourillon 55.5 ménagé sur le corps du vérin hydraulique de commande.

Le train de roulage 10.6 illustré en figure 6 est très proche du train de roulage 10.5 qui vient d'être décrit. La seule différence réside dans le mode d'attache de la lame élastique cintrée 51.6, dans la mesure où l'appendice pivotant 54.6 associé à l'extrémité encastrée 53.6 de cette lame élastique cintrée est articulé sur un appendice latéral 36.6 du corps 31.6 du vérin hydraulique de commande 30.6. La présence d'un tel appendice latéral peut s'avérer plus avantageuse et plus simple à monter qu'avec un tourillon d'articulation tel que celui qui était illustré pour le train de roulage décrit en référence à la figure 5.

Il va de soi que l'on pourra, là encore, utiliser un élément élastique réalisé sous la forme de deux demi-lames élastiques se raccordant à une pièce d'angle commune, comme c'était le cas pour les exemples précédemment décrits en se référant aux figures 3 et 4.

Comme pour les variantes précédentes, il sera en outre possible de modifier le train de roulage illustré en figure 5 ou 6 en remplaçant l'amortisseur linéaire par un amortisseur réalisé sous la forme d'un système rotatif, de préférence à gomme ou à friction.

L'invention n'est pas limitée aux modes de réalisation qui viennent d'être décrits, mais englobe au contraire toute variante reprenant, avec des moyens équivalents, les caractéristiques essentielles énoncées plus haut.

## Revendications

1. Train de roulage rétractable pour véhicule à sustentation sans contact, caractérisé par le fait qu'il comporte :
- un balancier (11) ayant une première extrémité fixée de façon articulée au véhicule autour d'un axe de basculement (12), et supportant au moins une roue (14);
- un amortisseur (20.1 ; 20.2 ; 20.3, 20.4 ; 20.5 ; 20.6) et un vérin hydraulique de commande (30.1 ; 30.2; 30.3 ; 30.4 ; 30.5 ; 30.6) reliés entre eux au niveau de deux extrémités associées, dont l'un (20.1 ; 30.2 ; 20.3 ; 20.4 ; 30.5 ; 30.6) est articulé par son autre extrémité à un axe de commande de basculement (15) agencé sur une seconde extrémité du balancier (11), tandis que l'autre (30.1 ; 20.2; 30.3 ; 30.4 ; 20.5 ; 20.6) est articulé au véhicule par son autre extrémité, sensiblement à la verticale de l'axe de basculement (12) dudit balancier ;
- un élément ressort en forme de lame élastique cintrée (50.1 ; 50.2 ; 50.3 ; 50.4 ; 50.5 ; 50.6) agencé pour exercer en permanence une action sur ledit amortisseur dans le sens de l'extension de celui-ci ;
- un moyen rigide de stabilisation (40.1 ; 40.2 ; 40.3 ; 40.4 ; 40.5 ; 40.6) associé à la liaison entre ledit amortisseur et ledit vérin de commande ;
- et par le fait que l'amortisseur, le vérin hydraulique de commande et le moyen rigide de stabilisation précités sont agencés dans un plan vertical commun de telle façon que l'amortisseur d'une part, et le vérin de commande ou le moyen rigide de stabilisation d'autre part, soient alignés sur une même direction (X) lorsque le train de roulage est sorti.

2. Train de roulage selon la revendication 1, caractérisé par le fait que l'amortisseur (20.1 ; 20.2 ; 20.3; 20.4) et le vérin hydraulique de commande (30.1 ; 30.2 ; 30.3 ; 30.4) sont reliés entre eux par une liaison articulée, et le moyen rigide de stabilisation est une bielle (41.1 ; 41.2 ; 41.3 ; 41.4) ayant une première extrémité articulée au véhicule autour d'un axe de pivotement (12 ; 43.2 ; 43.3 ; 43.4), et une seconde extrémité articulée au niveau de la liaison articulée entre ledit amortisseur et ledit vérin de commande.

3. Train de roulage selon la revendication 2, caractérisé par le fait que l'axe de pivotement de la bielle de stabilisation (41.1) est confondu avec l'axe de basculement (12) du balancier (11), et l'élément ressort (50.1) est intercalé entre les secondes extrémités de ladite bielle et dudit balancier.

4. Train de roulage selon la revendication 2, caractérisé par le fait que l'axe de pivotement (43.2) de la bielle de stabilisation (41.2) est disposé entre l'axe de basculement (12) du balancier (11) et l'axe d'articulation au véhicule de celui de l'amortisseur (20.2) ou du vérin hydraulique de commande (30.2) qui est relié audit véhicule, et l'élément ressort (50.2) est intercalé entre ledit amortisseur et ledit vérin de commande.

5. Train de roulage selon la revendication 2, caractérisé par le fait que le vérin hydraulique de commande (30.3 ; 30.4) est articulé au véhicule autour d'un axe (33.3; 33.4) adjacent à l'axe de basculement (12) du balancier (11), et son autre extrémité est articulée sur la bielle de stabilisation (41.3 ; 41.4) au voisinage de l'articulation de l'amortisseur (20.3 ; 20.4) sur ladite bielle, et l'élément ressort (50.3 ; 50.4) est intercalé entre ledit amortisseur et ladite bielle.

6. Train de roulage selon la revendication 1, caractérisé par le fait que l'amortisseur (20.5 ; 20.6) et le vérin hydraulique de commande (30.5 ; 30.6) sont agencés coaxialement et rigidement liés l'un à l'autre par leur corps, cette liaison rigide (40.5 ; 40.6) constituant alors le moyen de stabilisation.

7. Train de roulage selon la revendication 6, caractérisé par le fait que l'amortisseur (20.5 ; 20.6) est articulé par sa tige au véhicule et le vérin de commande (30.5 ; 30.6) est articulé par sa tige au balancier (11), et l'élément ressort (50.5 ; 50.6) est intercalé entre l'articulation dudit amortisseur et le corps dudit vérin de commande.

8. Train de roulage selon l'une des revendications 1 à 7, caractérisé par le fait que l'élément ressort est réalisé sous la forme d'une lame élastique monobloc (50.1; 50.2 ; 51.5 ; 51.6).

9. Train de roulage selon l'une des revendications 1 à 7, caractérisé par le fait que l'élément ressort est réalisé sous la forme de deux demi-lames élastiques (57.3, 58.3 ; 57.4, 58.4) se raccordant à une pièce d'angle commune (59.3 ; 59.4).

10. Train de roulage selon l'une des revendications 1 à 9, caractérisé par le fait que l'amortisseur est réalisé sous la forme d'un amortisseur hydraulique linéaire (20.1 ; 20.2 ; 20.3 ; 20.4 ; 20.5 ; 20.6).

11. Train de roulage selon l'une des revendications 1 à 9, caractérisé par le fait que l'amortisseur est réalisé sous la forme d'un système rotatif, de préférence à gomme ou à friction.
